# EUROPÄISCHE PATENTSCHRIFT

(11) **EP 2 711 202 B1**
(45) Veröffentlichungstag und Bekanntmachung des Hinweises auf die Patenterteilung: **14.10.2015**
(21) Anmeldenummer: 13180013.8
(22) Anmeldetag: 12.08.2013
(51) Int. Cl.: B60C 13/00

(54) **Fahrzeugluftreifen**
Pneumatic tyres for a vehicle
Pneus de véhicule

(30) Priorität: 21.09.2012 DE 102012108910
(43) Veröffentlichungstag der Anmeldung: 26.03.2014
(73) Patentinhaber: Continental Reifen Deutschland GmbH, 30165 Hannover (DE)
(72) Erfinder: Behr, Ulrich, 30169 Hannover (DE); Rittweger, Stefan, 30163 Hannover (DE)
(74) Vertreter: Finger, Karsten

(56) Entgegenhaltungen:
- DE-A1-102010 015 845
- JP-A- 2008 254 661
- US-A- 4 809 757

## Beschreibung

Die Erfindung betrifft einen Fahrzeugluftreifen, insbesondere Van-Reifen, mit einem Laufstreifen, Schulterbereichen und Seitenwänden, wobei - im Reifenquerschnitt betrachtet - eine der Seitenwände im Bereich der größten Breite des Fahrzeugluftreifens ein die Seitenwand gegen Scheuerkontakte schützendes, über die Seitenwand umlaufendes Schutzelement aufweist, wobei - im Reifenquerschnitt betrachtet - die Seitenwand aus einem oberen Seitenwandbereich und einem unteren Seitenwandbereich besteht, wobei die äußere Kontur des Schulterbereiches und des oberen Seitenwandbereiches jeweils ausschließlich krümmungsstetig konvex ausgebildet ist, und wobei der untere Seitenwandbereich eine ebenfalls ausschließlich krümmungsstetig konvex ausgebildete Kontur aufweist.

Derartige Fahrzeugluftreifen sind bekannt.

Dabei ist es bekannt, im Bereich der oberen Seitenwand oder im Übergang zwischen oberer und unterer Seitenwand eine spezielle sich aus der Seitenwandkontur in axialer Richtung A erhaben ausgebildete Scheuerleiste auszubilden, welche sich über den gesamten Umfang des Reifens erstreckt und die Seitenwand vor Anscheuerungen am Bordstein schützt. Aus der DE102010015845A1 ist es bekannt, den Scheuerschutzbereich direkt ohne spezielle Scheuerleiste in den oberen Seitenwandkonturabschnitt zu integrieren, wobei die Seitenwandkontur zwischen oberem Seitenwandabschnitt und unterem Seitenwandabschnitt hierzu mit einer axialen Stufe ausgebildet ist.

Beim Lagern der Reifen werden diese mit ihrer Seitenwand auf dem Boden oder auf der Seitenwand eines anderen Reifens abgelegt. Aufgrund der wirkenden Gewichtskräfte haften die Reifen in ihrem Scheuerbereich leicht an der Auflagefläche an. Ein Anheben der Reifen wird hierdurch erschwert.

Aus der US 2012/0073719 A1 ist ein Reifen mit einer Vielzahl in Umfangsrichtung hintereinander angeordneten Schutzrippen bekannt, welche sich jeweils in radialer Richtung R des Reifens erstrecken. Die schmalen Schutzrippen erheben sich dabei aus der Seitenwandoberfläche mit einer längs ihrer Erstreckung von radial innen nach radial außen hin zunehmenden axialen Höhe ihrer Erhebung. Eine derartige Ausbildung mit zunehmender axialer Erhebung bis zu einem Maximum im radialen äußeren Enderstreckungsbereich der Scheuerrippe ermöglicht eine besonders schnelle Beschädigung dieses Rippenelementes beim Anlaufen an Bordsteinkanten aufgrund hoher wirkender Abriebkräfte. Die Haltbarkeit derartiger dünner Schutzrippen mit in radialer Richtung von innen nach außen hin zunehmender axialer Erstreckungshöhe ist somit reduziert.

Aus der US4,219,066 sind über den gesamten Umfang des Fahrzeugluftreifens erstreckte Scheuerleisten bekannt, die ausgehend von ihrer radialen Erstreckungsmitte sowohl in radialer Richtung nach außen als auch in radialer Richtung nach innen hin jeweils bis zu ihrem radialen Erstreckungsende hin mit einer zunehmenden axialen Erstreckungshöhe gegenüber der Seitenwandkontur ausgebildet sind. Auch bei dieser Ausbildung kommt es bei Berührkontakt der Scheuerleiste mit Bordsteinkanten im Bereich der radial äußeren Ecken zum abrupten Berührkontakt und zu einem spontanen hohen Kraftaufbau. Hohe Abriebkräfte können auch bei derartigen Scheuerleisten zu schneller unerwünschter Form der Beschädigung der Scheuerleisten führen. Beim Ablegen derartiger Reifen mit ihrer Seitenwand auf eine ebene Oberfläche kommt es verstärkt zu Anhafteffekten, da sich in dem zwischen dem radial außen und radial innen hin mit zunehmender axialer Erhebung ausgebildeten Erstreckungsbereich mit der ebenen Ablageoberfläche schnell ein mit Unterdruck versehener Hohlraum bilden kann, welcher die Anhafteffekte weiter verstärkt.

**Aus der** US 4 809 757 A **ist ein Fahrzeugluftreifen gemäß den Merkmalen des Oberbegriffs des Anspruchs 1 bekannt.**

Der Erfindung liegt die Aufgabe zugrunde, mit einfachen Mitteln die Haltbarkeit des in der Reifenseitenwand ausgebildeten Scheuerbereichs zu verbessern und dabei ein Anhaften von flach abgelegten Reifen an Ablageoberflächen zu reduzieren.

Die Aufgabe wird erfindungsgemäß durch die Ausbildung eines Fahrzeugluftreifens, insbesondere Van-Reifens, mit einem Laufstreifen, Schulterbereichen und Seitenwänden, wobei - im Reifenquerschnitt betrachtet - eine der Seitenwände im Bereich der größten Breite des Fahrzeugluftreifens ein die Seitenwand gegen Scheuerkontakte schützendes, über die Seitenwand umlaufendes Schutzelement aufweist, wobei - im Reifenquerschnitt betrachtet - die Seitenwand aus einem oberen Seitenwandbereich und einem unteren Seitenwandbereich besteht, wobei die äußere Kontur des Schulterbereiches und des oberen Seitenwandbereiches jeweils ausschließlich krümmungsstetig konvex ausgebildet ist, und wobei der untere Seitenwandbereich eine ebenfalls ausschließlich krümmungsstetig konvex ausgebildete Kontur aufweist, gemäß den Merkmalen von Anspruch 1 gelöst, bei dem die Seitenwand zwischen oberem Seitenwandbereich und unterem Seitenwandbereich innerhalb des radialen Erstreckungsbereich des Schutzelementes zumindest in einzelnen Umfangsabschnitten des Umfangserstreckungswinkels α des Fahrzeugreifens jeweils mit einem radialen Konturabschnitt ausgebildet ist, welcher durch eine erste nach axial innen einspringende Stufe gegenüber der Kontur des oberen Seitenwandbereiches gebildet ist, **bei der diese erste** nach axial innen **einspringende Stufe nach axial innen** versetzt angeordnet ist **und der Konturabschnitt** sich von der radialen Position dieses Versatzes **ausgehend** längs seiner gesamten radialen Erstreckung nach innen hin - insbesondere geradlinig - rampenförmig in axialer Richtung nach außen bis über die axiale Position der über die Rampe hinweg gebildeten **Verlängerung der** Kontur des oberen Seitenwandbereiches erstreckt, und wobei die an die Rampe nach radial innen hin anschließende Kontur des Seitenwandbereiches durch eine zweite nach axial innen einspringende Stufe gegenüber der Kontur der Rampe nach axial innen versetzt angeordnet ist.

Durch diese Ausbildung wird es ermöglicht, dass der Scheuerbereich weiterhin voll seine Wirkung entfalten kann. Durch die zwischen erster axialer Stufe und zweiter axialer Stufe ausgebildete Rampe, welche von radial außen nach radial innen hin ihre axiale Erstreckung aus einem axialen Erstreckungsbereich unterhalb der umgebenden Seitenwand bis in eine axiale Erstreckungsposition axial oberhalb der Seitenwand erstreckt, wird ermöglicht, dass beim Ablegen des Reifens auf glatte Oberflächen haftende Kräfte deutlich reduziert werden können. Das Anhaften des Reifens beim Ablegen auf Ablageoberflächen oder beim Stapeln neuartiger Reifen wird hierdurch reduziert, das Aufnehmen des Reifens erleichtert. Darüber hinaus führt die längs der Erstreckung von radial außen nach radial innen hin rampenförmige zunehmende axiale Erhöhung zu einer langsam ansteigenden Zunahme der Kräfte beim Kontaktieren mit Bordsteinkanten, wodurch die Beschädigung der rampenförmigen Oberfläche und somit der Scheuerbereiche reduziert werden kann.

Besonders vorteilhaft ist die Ausbildung eines Fahrzeugreifens gemäß den Merkmalen von Anspruch 2, bei dem das Schutzelement in die Kontur des oberen Seitenwandbereiches integriert ist und dass der untere Seitenwandbereich durch eine nach axial innen einspringende Stufe gegenüber der Kontur des oberen Seitenwandbereiches nach axial innen versetzt angeordnet ist und eine ebenfalls ausschließlich krümmungsstetig konvex ausgebildete Kontur aufweist. Hierdurch kann aerodynamischen Eigenschaften der Seitenwand verbessert werden.

Besonders vorteilhaft ist die Ausbildung eines Fahrzeugreifens gemäß den Merkmalen von Anspruch 3, bei dem längs der Umfangserstreckung der Rampe zumindest in einem - insbesondere mittleren -Teilerstreckungsabschnitt die an die Rampe nach radial innen hin anschließende Kontur des Seitenwandbereiches, welche durch die zweite nach axial innen einspringende Stufe gegenüber der Kontur der Rampe nach axial innen versetzt angeordnet ist, die Kontur des oberen Seitenwandbereiches ist. Hierdurch kann die Kontaktfläche der Seitenwand beim Ablegen auf Oberflächen, die Adhäsion und somit die Anhaftung weiter reduziert werden.

Besonders vorteilhaft ist die Ausbildung eines Fahrzeugreifens gemäß den Merkmalen von Anspruch 4, bei dem längs der Umfangserstreckung der Rampe zumindest in einem - insbesondere in zwei äußeren - Teilerstreckungsabschnitt die an die Rampe nach radial innen hin anschließende Kontur des Seitenwandbereiches, welche durch die zweite nach axial innen einspringende Stufe gegenüber der Kontur der Rampe nach axial innen versetzt angeordnet ist, die Kontur des unteren Seitenwandbereiches ist. Hierdurch kann die Anhaftung weiter reduziert werden.

Besonders vorteilhaft ist die Ausbildung eines Fahrzeugreifens gemäß den Merkmalen von Anspruch 5, bei dem die erste Stufe eine axiale Breite von 0,5mm bis 1mm aufweist. Hierdurch kann ein ausreichender Abstand zur Ablageoberfläche zur ausreichenden Reduktion der Adhäsion bei minimaler Materialanhäufung auf der Seitenwand ermöglicht werden.

Besonders vorteilhaft ist die Ausbildung eines Fahrzeugreifens gemäß den Merkmalen von Anspruch 6, bei dem die zweite Stufe eine axiale Breite von 0,5mm bis 4,5mm aufweist. Hierdurch kann ein ausreichender Abstand zur Ablageoberfläche zur ausreichenden Reduktion der Adhäsion bei guten aerodynamischen Eigenschaften ermöglicht werden.

Besonders vorteilhaft ist die Ausbildung eines Fahrzeugreifens gemäß den Merkmalen von Anspruch 7, bei dem der Umfangserstreckungswinkel α mit 15°≤α≤ 80° ausgebildet ist. Hierdurch kann in einfacher Weise eine ausreichende Reduktion der Adhäsionskräfte wirkungsvoll umgesetzt werden.

Besonders vorteilhaft ist die Ausbildung eines Fahrzeugreifens gemäß den Merkmalen von Anspruch 8, bei dem der Umfangserstreckungswinkel α mit α=360° ausgebildet ist. Hierdurch können zusätzlich die aerodynamischen Eigenschaften weiter verbessert werden.

Besonders vorteilhaft ist die Ausbildung eines Fahrzeugreifens gemäß den Merkmalen von Anspruch 9, bei dem die Stufe eine axiale Breite von 1mm bis 4mm, vorzugsweise von 1,5mm aufweist, und insbesondere zumindest in einem Umfangserstreckungsabschnitt der Rampe die zweite Stufe bildet. Hierdurch kann eine ausreichende Abriebfestigkeit mit geringem Materialaufwand sichergestellt werden.

Besonders vorteilhaft ist **das Verfahren zur Herstellung** eines Fahrzeugreifens gemäß den Merkmalen von Anspruch 10.

Die Erfindung wird im Folgenden an Hand der in den Figuren 1 bis 5 dargestellten Ausführungsbeispiele näher erläutert. Hierin zeigen
- Fig.1: eine Querschnittsdarstellung eines Reifens mit Darstellung der Außenkontur, wobei lediglich eine Reifenhälfte dargestellt ist,
- Fig.2: eine vergrößerte Darstellung eines Ausschnitts der äußeren Kontur der Seitenwand von Fig.1,
- Fig.3: Draufsicht auf die Seitenwand eines Reifens, wobei Fig.2 die Querschnittsdarstellung gemäß Schnitt II-II von Fig.3 darstellt,
- Fig.4: eine erfindungsgemäße Darstellung der äußeren Kontur der Seitenwand des Reifens von Fig.3 gemäß Schnitt IV-IV von Fig.3 und
- Fig.5: eine erfindungsgemäße Darstellung der äußeren Kontur der Seitenwand von Fig.3 gemäß Schnitt V-V von Fig.3.

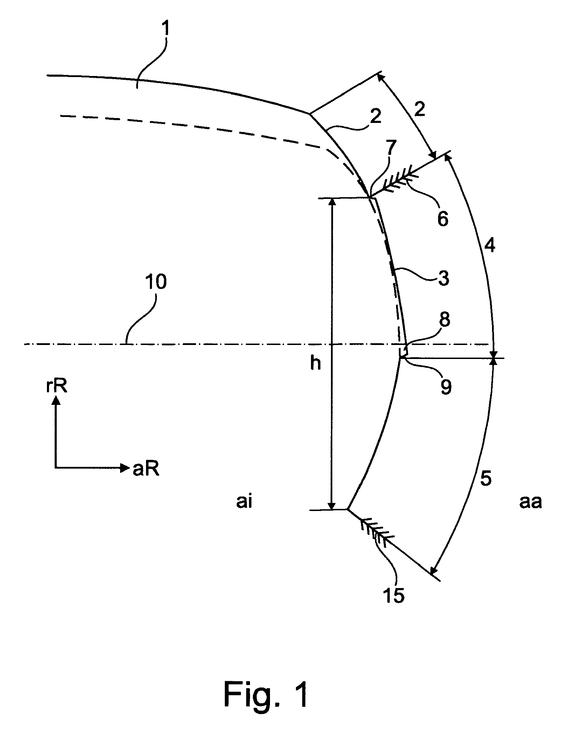

Die Fig.1 zeigt einen Querschnitt durch die äußere Kontur eines hälftigen Fahrzeugluftreifens. Die äußere Kontur ist mit der durchgezogenen Linie dargestellt. Der Fahrzeugluftreifen ist ein Van-Reifen und weist einen Laufstreifen 1, eine Reifenschulter 2 und eine Seitenwand 3 auf. Die Seitenwand 3 besteht aus einem oberen Seitenwandbereich 4 und einem unteren Seitenwandbereich 5. Die äußere Kontur des Schulterbereiches 2 und die äußere Kontur des oberen Seitenwandbereiches 4 sind krümmungsstetig konvex (nach axial außen gekrümmt) ausgebildet -die einzige Ausnahme ist die zwangsweise Ausnehmung 7 im Bereich der Splitlinie 6. Die Seitenwand 3 weist ein Schutzelement 8 gegen Beschädigungen durch Scheuerkontakte auf, welches in die äußere Kontur des oberen Seitenwandbereiches 4 integriert ist. Das Schutzelement 8 ist etwa **im Äquator 10** des Reifens angeordnet. Der untere Seitenwandbereich 5 ist durch eine nach axial innen einspringende Stufe 9 gegenüber der Kontur des oberen Seitenwandbereiches 4 nach axial innen versetzt angeordnet und weist eine ebenfalls ausschließlich krümmungsstetig konvex ausgebildete Kontur auf. Das radial innere Ende der Stufe 9, welches den oberen Seitenwandbereich 4 von den unteren Seitenwandbereich 5 trennt, befindet sich auf 60% der radialen Höhe (h) der Seitenwand 3, beginnend von der ersten Splitlinie 6, welche Schulterbereich 2 vom oberen Seitenwandbereich 4 trennt. Die Seitenwand des Reifens ist durch die Seitenwandschale einer segmentierten Vulkanisierform geformt und reicht von der ersten Splitlinie 6 bis zur zweiten Splitlinie 15, welche die Seitenwand von dem Wulstbereich des Reifens trennt.

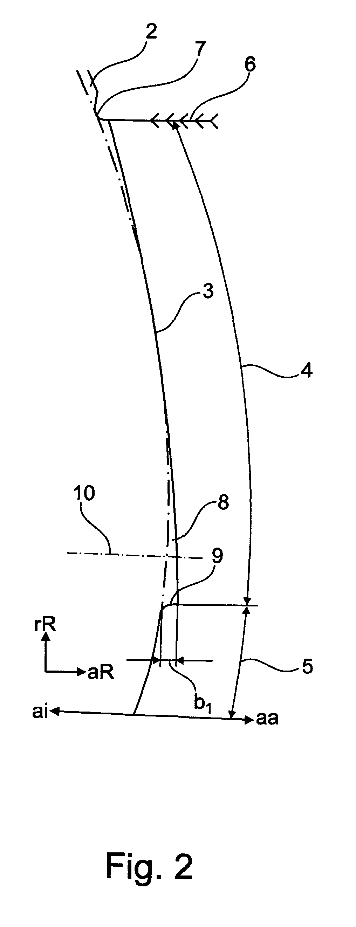

Die Fig.2 zeigt eine Vergrößerung eines Ausschnitts der äußeren Kontur der Reifenschulter 2 und der äußeren Kontur der Seitenwand 3 der Fig.1. Die Stufe 9 weist eine in axialer Richtung A des Reifens gemessene Breite b₁ von 1mm ≤ b₁≤4mm, im dargestellten Ausführungsbeispiel von 1,5mm auf, so dass die Kontur des unteren Seitenwandbereiches hier um 1,5mm gegenüber der Kontur des oberen Seitenwandbereiches nach axial innen (ai) versetzt angeordnet ist.

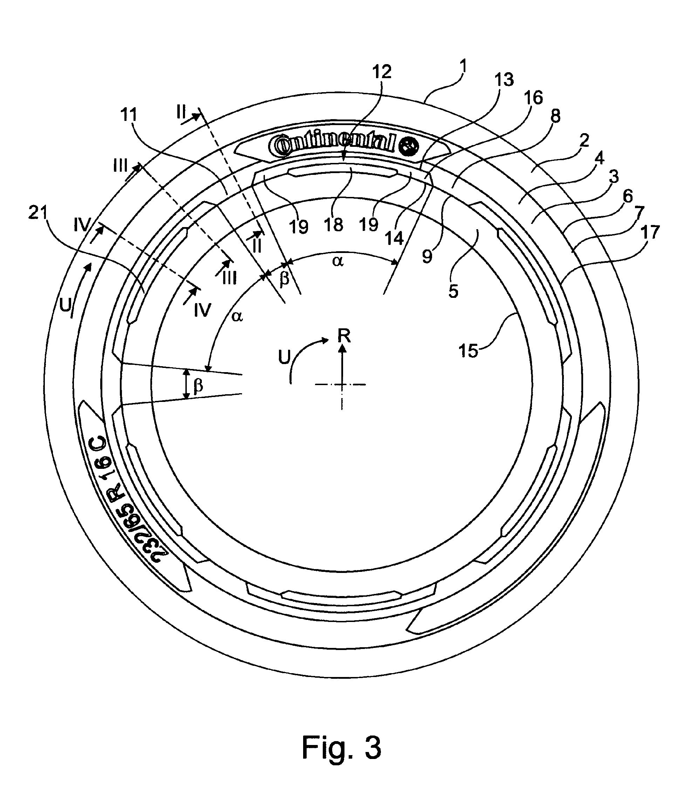

Fig. 3 zeigt die in axialer Richtung A des Reifens auf die Reifenseitenwand des Fahrzeugluftreifens von Fig.1 gerichtete Draufsicht. Dabei ist erkennbar, dass die Reifenseitenwand aus über den Umfang verteilten und in alternativer Abfolge hintereinander angeordneten Umfangssegmentabschnitten 11 und 12 ausgebildet ist. Die Umfangssegmentabschnitte 11 erstrecken sich in Umfangsrichtung U jeweils über einen Umfangswinkel ß. Die Umfangssegmentabschnitte 12 erstrecken sich jeweils über einen Umfangswinkel α.

Im Längs der Erstreckung des Umfangssegmentabschnitt 11 ist die Reifenseitenwand jeweils mit der in Fig.1 und in Fig.2 dargestellte Seitenwandkontur ausgebildet.

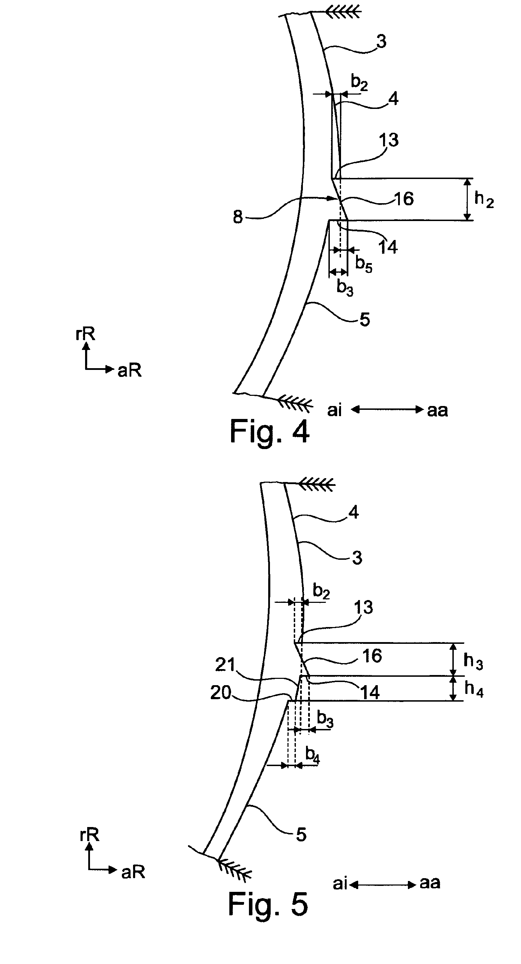

Wie in Fig. 4 dargestellt ist, ist auch im Umfangserstreckungsabschnitt 12 die Seitenwand 3 aus einem oberen Seitenwandbereich 4 und aus einem unteren Seitwandbereich 5 ausgebildet. Die äußere Kontur des Schulterbereichs 2 und die äußere Kontur des oberen Seitenwandbereichs 4 sind auch hier krümmungsstetig konvex (nach axial außen gekrümmt) ausgebildet. Die einzige Ausnahme ist die zwangsweise Ausnehmung im Bereich der Splitlinie 6. Die Seitenwand 3 ist im Bereich des Schutzelementes 8, welches in die äußere Kontur des oberen Seitenwandbereiches 4 integriert ist, etwa im Bereich des Äquators 10 (hier gibt der Äquator ausnahmsweise und abweichend von der üblichen Verwendung bei Reifen die radiale Position des Reifens mit der größten Breite an) angeordnet. Im Erstreckungsbereich des Schutzelements 8 ist eine von der Kontur des oberen Seitenwandbereichs 4 in axialer Richtung ai einspringende Stufe 13 mit der in axialer Richtung A gemessenen Breite b₂ ausgebildet. Die äußere Kontur der Seitenwand 3 ist im Anschluss an die Stufe 13in radialer Richtung R nach innen hin geradlinig als Rampe 16 ausgebildet, welche sich längs ihrer radialen Erstreckung der Erstreckungshöhe h₂ nach innen in axialer Richtung A nach außen aa bis über die in Fig. 4 gestrichelt dargestellte Verlängerung der weitergeführten Konturlinie der oberen Seitenwand 3 hinaus erstreckt, wobei das axiale Maß b₅ der Erstreckung über diese Konturlinie hinaus mit ca. 1mm ausgebildet ist. Am radial inneren Erstreckungsende der Rampe 16 ist eine in axialer Richtung nach innen ai hineinspringende Stufe 14 ausgebildet, welche sich in axialer Richtung ai zur Innenseite des Reifens über eine in axialer Richtung Erstreckungsbreite b₃ hinweg erstreckt. Am axial inneren Erstreckungsende der Stufe 14 ist die Kontur der Seitenwand 3 mit dem unteren Seitenwandbereich 5 ausgebildet und weist eine ebenfalls ausschließlich krümmungsstetig konvex ausgebildete Kontur auf.

In einem Ausführungsbeispiel ist diese in Fig. 4 dargestellte Ausbildung der Rampe 16 längs der gesamten Erstreckung des Umfangsabschnitts 12 über den gesamten Erstreckungsbereich des Erstreckungswinkels α ausgebildet. Die Erstreckungsbreite b₁ der ersten Stufe 13 ist mit 0,5 mm ≤ b₂ ≤ 1mm, beispielsweise mit b₂ = 0,5 mm ausgebildet. Die Erstreckungsbreite b₃ der zweiten Stufe 14 ist mit einem 1mm ≤ b₂ ≤ 4,5 mm ausgebildet, beispielsweise mit b₂ = 1mm.

Der Umfangserstreckungswinkel α ist mit 15°≤α≤80° ausgebildet. Der Umfangserstreckungswinkel ß ist mit 15°≤ß≤35° ausgebildet. Beispielsweise ist α=30° und ß = 10°.

Fig. 3 zeigt ein weiteres Ausführungsbeispiel, bei welchem der Umfangserstreckungsabschnitt 12 in Umfangsrichtung U des Reifens gesehen aus zwei jeweils zu einem benachbarten Umfangsabschnitt 11 hin weisend angeordneten Randabschnitten 19 und einem zwischen den beiden Randabschnitten 19 ausgebildeten mittleren Abschnitt 18 ausgebildet ist. Die beiden Randabschnitte 19 sind dabei so wie im Zusammenhang mit der Fig. 4 erläutert und dargestellt ausgebildet. Im mittleren Abschnitt 18 ist, wie in Fig. 5 dargestellt ist, die in radialer Richtung R gemessene Erstreckungshöhe h₃ kleiner ausgebildet als die in den Randerstreckungsabschnitten 19 ausgebildete radiale Erstreckungshöhe h₂ der Rampe 16 in den Randabschnitten 19. Die Rampe 16 erstreckt sich jedoch auch im mittleren Erstreckungsabschnitt 18 in axialer Richtung nach außen aa bis in eine Position axial außerhalb der Verlängerung der Kontur der oberen Seitenwand 3. Im mittleren Erstreckungsabschnitt 18 ist der durch die nach axial innen ai einspringende Stufe 14 gebildete axiale Versatz der axialen Breite b₃ jedoch lediglich bis zur Position der durch die Rampe 16 hindurch gebildeten Verlängerungen der Kontur der äußeren Seitenwand 3 ausgebildet. Von dem am nach axial innen ai gerichteten Erstreckungsende der Stufe 14 ausgebildeten Erstreckungsende der Stufe 14 erstreckt sich die Seitenwandkontur 21 als Verlängerung der äußeren Seitenwandkontur 4 bis in einen radialen Abstand h₄ von der Stufe 14 mit (1/2)h₃ ≤ h₄ ≤ (3/2)h₃, An dem in radialer Richtung R nach innen hin gebildeten Erstreckungsende des Erstreckungsabschnitts 21 ist die Seitenwandkontur mit einer in axialer Richtung nach innen ai hin einspringenden Stufe 20 der in axialer Richtung gemessenen Erstreckungsbreite b₄ ausgebildet. Von dem in axialer Richtung nach innen ai hin ausgebildeten Erstreckungsende der Stufe 20 ausgehend erstreckt sich der untere Seitenwandbereich 5 nach radial innen hin. In diesem Ausführungsbeispiel ist b₃ = 0,5 mm und b₄ mit 1mm ≤ b₄ ≤ 4mm. Die Gesamterstreckungshöhe (h₃ + h₄) ist mit (1/3)*(h₃ + h₄) ≤ h₂ ≤ (2/3)*(h₃ + h₄) ausgebildet.

In einem anderen nicht dargestellten Ausführungsbeispiel ist α = 360° ausgebildet. Dabei ist in bei diesem Ausführungsbeispiel die gesamte Ausbildung der Seitenwand über ihre gesamte Erstreckung über den Umfang des Reifens hinweg mit der - wie im Zusammenhang mit Fig. 4 beschriebenen - Rampe 16 ausgebildet. Die Rampe 16 erstreckt sich somit über den gesamten Umfang des Fahrzeugluftreifens.

In einer anderen, nicht dargestellter Ausführung sind bei einer Ausbildung mit α = 360° über den Umfang des Fahrzeugluftreifens hinweg in alternierend hintereinander angeordneter Reihenfolge verteilt erste Umfangssegmente und zweite Umfangssegmente ausgebildet, wobei die ersten Umfangssegmente wie die im Zusammenhang mit Fig. 5 beschriebenen Randabschnitte 19 und die zweiten Umfangssegmente wie die im Zusammenhang mit Fig. 5 beschriebenen Mittenabschnitte 18 ausgebildet sind.

In den Figuren ist in gestrichelter Linie die neutrale Seitenwandkontur des Reifens ohne zusätzliches Seitenwandgummimaterial dargestellt.

Abweichend von der bei Reifen üblichen Verwendung des Begriffs "Äquator" bezeichnet der oben genannte Begriff "Äquator" hier die radiale Position des Reifens, in welcher der Reifen seine größte Breite aufweist. Die Position der größten Breite wird dabei an dem für den Reifen nach E.T.R.T.O. vorgesehene Normfelge bei Standardbedingungen gemäß E.T.R.T.O. (Last bei 70 % der Tragfähigkeit bei einem Innendruck von 2,5 bar, Innendruck 85 % von 2,5 bar) gemessen.

Abweichend von der hier ausnahmsweise genutzten Verwendung des Begriffs "Äquator" gibt dieser in der bei Reifen üblichen Verwendung die Position des größten Durchmessers des Reifens an.

### Bezugszeichenliste

### (Teil der Beschreibung)

- 1: Laufstreifen
- 2: Reifenschulter
- 3: Seitenwand
- 4: oberer Seitenwandbereich
- 5: unterer Seitenwandbereich
- 6: erste Splitlinie
- 7: Ausnehmung
- 8: Schutzelement
- 9: Stufe
- 10: Position der größten Breite des Reifens
- 11: Umfangsabschnitt
- 12: Umfangsabschnitt
- 13: Stufe
- 14: Stufe
- 15: zweite Splitlinie
- 16: Rampe
- 17: Nut
- 18: Mittlerer Abschnitt
- 19: Randabschnitt
- 20: Stufe
- 21: Seitenwandkontur

- aR: axiale Richtung
- rR: radiale Richtung
- ai: axial innen
- aa: axial außen

## Patentansprüche

1. Fahrzeugluftreifen, insbesondere Van-Reifen, mit einem Laufstreifen (1), Schulterbereichen (2) und Seitenwänden (3), wobei - im Reifenquerschnitt betrachtet - eine der Seitenwände (3) im Bereich der größten Breite (10) des Fahrzeugluftreifens ein die Seitenwand (3) gegen Scheuerkontakte schützendes, über die Seitenwand umlaufendes Schutzelement (8) aufweist, wobei - im Reifenquerschnitt betrachtet - die Seitenwand (3) aus einem oberen Seitenwandbereich (4) und einem unteren Seitenwandbereich (5) besteht, wobei die äußere Kontur des Schulterbereiches (2) und des oberen Seitenwandbereiches (4) ausschließlich krümmungsstetig konvex ausgebildet ist, und wobei der untere Seitenwandbereich (5) eine ebenfalls ausschließlich krümmungsstetig konvex ausgebildete Kontur aufweist, und
**wobei die Seitenwand zwischen oberem Seitenwandbereich (4) und unterem Seitenwandbereich (5) innerhalb des radialen Erstreckungsbereich des Schutzelementes (8) zumindest in einzelnen Umfangsabschnitten (11) des Umfangserstreckungswinkels α des Fahrzeugreifens jeweils mit einem radialen Konturabschnitt ausgebildet ist, welcher durch eine erste nach axial innen einspringende Stufe (13) gegenüber der Kontur des oberen Seitenwandbereiches (4) gebildet ist,**
**dadurch gekennzeichnet,**
**dass** diese erste nach axial innen einspringende Stufe (13) **des Konturabschnitts** gegenüber der Kontur des oberen Seitenwandbereiches (4) nach axial innen versetzt angeordnet ist **und der Konturabschnitt sich von der radialen Position dieses Versatzes ausgehend** längs seiner gesamten radialen Erstreckung nach innen hin - insbesondere geradlinig - rampenförmig in axialer Richtung nach außen bis über die axiale Position der über die Rampe (16) hinweg gebildeten **Verlängerung der Kontur** des oberen Seitenwandbereiches (4) erstreckt, und wobei die an die Rampe (16) nach radial innen hin anschließende Kontur des Seitenwandbereiches durch eine zweite nach axial innen einspringende Stufe (14) gegenüber der Kontur der Rampe (16) nach axial innen versetzt angeordnet ist.

2. Fahrzeugreifen nach Anspruch 1,
wobei das Schutzelement (8) in die Kontur des oberen Seitenwandbereiches integriert ist und dass der untere Seitenwandbereich (5) durch eine nach axial innen einspringende Stufe (9) gegenüber der Kontur des oberen Seitenwandbereiches (4) nach axial innen versetzt angeordnet ist und eine ebenfalls ausschließlich krümmungsstetig konvex ausgebildete Kontur aufweist.

3. Fahrzeugreifen nach Anspruch 2,
bei dem längs der Umfangserstreckung der Rampe (16) zumindest in einem - insbesondere mittleren (18)-Teilerstreckungsabschnitt die an die Rampe (16) nach radial innen hin anschließende Kontur des Seitenwandbereiches, welche durch die zweite nach axial innen einspringende Stufe (9) gegenüber der Kontur der Rampe (16) nach axial innen versetzt angeordnet ist, die Kontur des oberen Seitenwandbereiches (4) ist.

4. Fahrzeugreifen nach Anspruch 2 oder 3,
bei dem längs der Umfangserstreckung der Rampe (16) zumindest in einem - insbesondere in zwei äußeren (19) - Teilerstreckungsabschnitt die an die Rampe (16) nach radial innen hin anschließende Kontur des Seitenwandbereiches, welche durch die zweite nach axial innen einspringende Stufe (14) gegenüber der Kontur der Rampe (16) nach axial innen versetzt angeordnet ist, die Kontur des unteren Seitenwandbereiches (5) ist.

5. Fahrzeugreifen nach Anspruch 1,
bei dem die erste Stufe (13) eine axiale Breite von 0,5mm bis 1mm aufweist.

6. Fahrzeugreifen nach Anspruch 1,
bei dem die zweite Stufe (14) eine axiale Breite von 0,5mm bis 4,5mm aufweist.

7. Fahrzeugreifen nach Anspruch 1,
bei dem der Umfangserstreckungswinkel α mit 15°≤α≤ 80° ausgebildet ist.

8. Fahrzeugreifen nach Anspruch 1,
bei dem der Umfangserstreckungswinkel α mit α=360° ausgebildet ist.

9. Fahrzeugreifen nach Anspruch 2,
bei dem die Stufe (9) eine axiale Breite (11) von 1mm bis 4mm, vorzugsweise von 1,5mm aufweist, und insbesondere zumindest in einem Umfangserstreckungsabschnitt der Rampe (16) die zweite Stufe (14) bildet.

10. **Verfahren zur Herstellung eines Fahrzeugreifens** nach Anspruch 1 oder 2,
bei dem der Fahrzeugluftreifen mit einer segmentierten Vulkanisierform **derart** heizgepresst **wird, dass** der Laufstreifen (1) und der Schulterbereich (2) durch radial verfahrbare Formsegmente und jede Seitenwand (3) durch eine an die radial verfahrbaren Formsegmente angrenzende Seitenwandschale geformt **wird,** so dass der vulkanisierte Fahrzeugluftreifen im Bereich der Grenzfläche von radial verfahrbaren Formsegmenten zur Seitenwandschale eine Splitlinie (6) aufweist, **wobei** der obere Seitenwandbereich (4) zwischen 50% und 70%, vorzugsweise etwa 60% und der untere Seitenwandbereich (5) zwischen 50% und 30%, vorzugsweise etwa 40% der mit der Seitenwandschale geformten Seitenwand (3) einnimmt.

## Claims

1. Pneumatic vehicle tyre, in particular a van tyre, with a tread rubber (1), shoulder regions (2) and sidewalls (3), wherein one of the sidewalls (3) has in the region of the greatest width (10) of the pneumatic vehicle tyre - when viewed in the cross section of the tyre - a protective element (8), running around the sidewall and protecting the sidewall (3) from abrasive contacts, wherein the sidewall (3) - when viewed in the cross section of the tyre - consists of an upper sidewall region (4) and a lower sidewall region (5), wherein the outer contour of the shoulder region (2) and of the upper sidewall region (4) is formed exclusively in a continuously convexly curved manner, and wherein the lower sidewall region (5) has a contour that is likewise formed exclusively in a continuously convexly curved manner, and
wherein, between the upper sidewall region (4) and the lower sidewall region (5), the sidewall is formed within the region of radial extent of the protective element (8), at least in individual circumferential portions (11) of the angle of circumferential extent α of the vehicle tyre, respectively with a radial contour portion that is formed by a first axially inwardly indented stage (13) with respect to the contour of the upper sidewall region (4),
**characterized**
**in that** this first axially inwardly indented stage (13) of the contour portion is arranged offset axially inwards with respect to the contour of the upper sidewall region (4) and the contour portion extends from the radial position of this offset along its entire inward radial extent - in particular in a straight line - in the form of a ramp outwards in the axial direction to beyond the axial position of the extension of the contour of the upper sidewall region (4) formed beyond the ramp (16), and wherein the contour of the sidewall region adjoining the ramp (16) radially inwards is arranged offset axially inwards with respect to the contour of the ramp (16) by a second axially inwardly indented stage (14).

2. Vehicle tyre according to Claim 1,
wherein the protective element (8) is integrated in the contour of the upper sidewall region and wherein the lower sidewall region (5) is arranged offset axially inwards with respect to the contour of the upper sidewall region (4) by an axially inwardly indented stage (9) and has a contour that is likewise formed exclusively in a continuously convexly curved manner.

3. Vehicle tyre according to Claim 2,
in which, along the circumferential extent of the ramp (16), at least in a partial portion of its extent - in particular a middle portion (18), the contour of the sidewall region adjoining the ramp (16) radially inwards that is arranged offset axially inwards with respect to the contour of the ramp (16) by the second axially inwardly indented stage (9) is the contour of the upper sidewall region (4).

4. Vehicle tyre according to Claim 2 or 3,
in which, along the circumferential extent of the ramp (16), at least in a partial portion of its extent - in particular two outer portions (19), the contour of the sidewall region adjoining the ramp (16) radially inwards that is arranged offset axially inwards with respect to the contour of the ramp (16) by the second axially inwardly indented stage (14) is the contour of the lower sidewall region (5).

5. Vehicle tyre according to Claim 1,
in which the first stage (13) has an axial width of 0.5 mm to 1 mm.

6. Vehicle tyre according to Claim 1,
in which the second stage (14) has an axial width of 0.5 mm to 4.5 mm.

7. Vehicle tyre according to Claim 1,
in which the angle of circumferential extent α is formed with 15°≤α≤80°.

8. Vehicle tyre according to Claim 1,
in which the angle of circumferential extent α is formed with α=360°.

9. Vehicle tyre according to Claim 2,
in which the stage (9) has an axial width (11) of 1 mm to 4 mm, preferably of 1.5 mm, and, in particular at least in a portion of the circumferential extent of the ramp (16), forms the second stage (14).

10. Method for producing a vehicle tyre according to Claim 1 or 2,
in which the pneumatic vehicle tyre is hot-pressed with a segmented vulcanizing mould in such a way that the tread rubber (1) and the shoulder region (2) are formed by radially movable mould segments and each sidewall (3) is formed by a sidewall shell adjacent to the radially movable mould segments, so that the vulcanized pneumatic vehicle tyre has a split line (6) in the region of the interface of the radially movable mould segments with the sidewall shell, wherein the upper sidewall region (4) takes up between 50% and 70%, preferably approximately 60%, and the lower sidewall region (5) takes up between 50% and 30%, preferably approximately 40%, of the sidewall (3) formed with the sidewall shell.

## Revendications

1. Pneu de véhicule, en particulier pneu de camionnette, comprenant une bande de roulement (1), des régions d'épaulement (2) et des parois latérales (3), l'une des parois latérales (3), vue en coupe transversale du pneu, présentant dans la région de la plus grande largeur (10) du pneu de véhicule un élément de protection (8) s'étendant circonférentiellement sur la paroi latérale et protégeant la paroi latérale (3) contre les contacts abrasifs, la paroi latérale (3), vue en coupe transversale du pneu, se composant d'une région de paroi latérale supérieure (4) et d'une région de paroi latérale inférieure (5), le contour extérieur de la région d'épaulement (2) et de la région de paroi latérale supérieure (4) étant réalisé exclusivement sous forme convexe avec une courbure constante, et la région de paroi latérale inférieure (5) présentant un contour réalisé également exclusivement sous forme convexe avec une courbure constante, et
la paroi latérale entre la région de paroi latérale supérieure (4) et la région de paroi latérale inférieure (5) étant réalisée à l'intérieur de la région d'étendue radiale de l'élément de protection (8) au moins dans des portions périphériques individuelles (11) de l'angle d'étendue périphérique α du pneu de véhicule à chaque fois avec une portion de contour radiale, laquelle est formée par un premier étage (13) faisant saillie axialement vers l'intérieur par rapport au contour de la région de paroi latérale supérieure (4),
**caractérisé en ce que**
ce premier étage (13) faisant saillie axialement vers l'intérieur de la portion de contour est disposé par rapport au contour de la région de paroi latérale supérieure (4) de manière décalée axialement vers l'intérieur et la portion de contour s'étend à partir de la position radiale de ce décalage le long de toute son étendue radiale vers l'intérieur - notamment en ligne droite - en forme de rampe dans la direction axiale vers l'extérieur jusqu'au-delà de la position axiale du prolongement du contour de la région de paroi latérale supérieure (4) formé au-delà de la rampe (16), et le contour de la région de paroi latérale se raccordant à la rampe (16) radialement vers l'intérieur étant disposé de manière décalée axialement vers l'intérieur par un deuxième étage (14) faisant saillie axialement vers l'intérieur par rapport au contour de la rampe (16).

2. Pneu de véhicule selon la revendication 1,
dans lequel l'élément de protection (8) est intégré dans le contour de la région de paroi latérale supérieure et dans lequel la région de paroi latérale inférieure (5) est disposée de manière décalée axialement vers l'intérieur par un étage (9) faisant saillie axialement vers l'intérieur par rapport au contour de la région de paroi latérale supérieure (4) et présente un contour réalisé également exclusivement sous forme convexe avec une courbure constante.

3. Pneu de véhicule selon la revendication 2,
dans lequel le long de l'étendue périphérique de la rampe (16), au moins dans une portion d'étendue partielle - notamment centrale (18) -, le contour de la région de paroi latérale se raccordant à la rampe (16) radialement vers l'intérieur, qui est disposé de manière décalée axialement vers l'intérieur par rapport au contour de la rampe (16) par le deuxième étage (9) faisant saillie axialement vers l'intérieur, est le contour de la région de paroi latérale supérieure (4).

4. Pneu de véhicule selon la revendication 2 ou 3,
dans lequel le long de l'étendue périphérique de la rampe (16), au moins dans une portion d'étendue partielle - notamment dans deux portions d'étendue partielle extérieures (19) -, le contour de la région de paroi latérale se raccordant à la rampe (16) radialement vers l'intérieur, qui est disposé de manière décalée axialement vers l'intérieur par rapport au contour de la rampe (16) par le deuxième étage (14) faisant saillie axialement vers l'intérieur, est le contour de la région de paroi latérale inférieure (5).

5. Pneu de véhicule selon la revendication 1,
dans lequel le premier étage (13) présente une largeur axiale de 0,5 mm à 1 mm.

6. Pneu de véhicule selon la revendication 1,
dans lequel le deuxième étage (14) présente une largeur axiale de 0,5 mm à 4,5 mm.

7. Pneu de véhicule selon la revendication 1,
dans lequel l'angle d'étendue périphérique α est réalisé avec 15° ≤ α ≤ 80°.

8. Pneu de véhicule selon la revendication 1,
dans lequel l'angle d'étendue périphérique α est réalisé avec α = 360°.

9. Pneu de véhicule selon la revendication 2,
dans lequel l'étage (9) présente une largeur axiale (11) de 1 mm à 4 mm, de préférence de 1,5 mm, et forme le deuxième étage (14) en particulier au moins dans une portion d'étendue périphérique de la rampe (16).

10. Procédé de fabrication d'un pneu de véhicule selon la revendication 1 ou 2, dans lequel le pneu de véhicule est pressé à chaud avec un moule de vulcanisation segmenté, de telle sorte que la bande de roulement (1) et la région d'épaulement (2) sont formées par des segments de moule déplaçables radialement et chaque paroi latérale (3) est formée par une coque de paroi latérale adjacente aux segments de moule déplaçables radialement de telle sorte que le pneu de véhicule vulcanisé présente, dans la région de la surface limite de segments de moule déplaçables radialement vers la coque de paroi latérale, une ligne de division (6), la région de paroi latérale supérieure (4) constituant entre 50 % et 70 %, de préférence approximativement 60 %, et la région de paroi latérale inférieure (5) constituant entre 50 % et 30 %, de préférence environ 40 %, de la paroi latérale (3) formée avec la coque de paroi latérale.
